# EUROPEAN PATENT APPLICATION

(11) **EP 1 288 511 A1**
(43) Date of publication of application: **05.03.2003**
(21) Application number: 01925982.9
(22) Date of filing: 26.04.2001
(51) Int. Cl.: F16C 32/04, H01L 21/205

(54) **MAGNETIC BEARING AND MAGNETIC LEVITATION APPARATUS**

(30) Priority: 26.04.2000 JP 2000126118
(71) Applicant: EBARA CORPORATION, Ohta-ku, Tokyo 144-8510 (JP)
(72) Inventor: OOYAMA, Atsushi, Fujisawa-shi, Kanagawa 252-0822 (JP); NAKAZAWA, Toshiharu, Chigasaki-shi, Kanagawa 253-0027 (JP); BARADA, Toshimitsu, Fujisawa-shi, Kanagawa 251-0015 (JP); SEKIGUCHI, Shinichi, Yokohama-shi, Kanagawa 235-0022 (JP); SHINOZAKI, Hiroyuki, Kamakura-shi, Kanagawa 247-0053 (JP)
(74) Representative: Wagner & Geyer
(86) International application number: JP0103651
(87) International publication number: WO01081780

(57) **Abstract**

There is provided a magnetic bearing in which a magnetic gap between magnetic pole faces of the stator and the rotor can be reduced, and which is reduced in size and has excellent corrosion resistance. This magnetic bearing comprises: a magnetic bearing rotor 16 provided on the rotary shaft; and a magnetic bearing stator 41 provided around the magnetic bearing rotor, wherein the magnetic bearing stator comprises: a stator core 42 having magnetic pole faces exposed toward the magnetic bearing rotor; excitation coils 43a attached to the stator core; and corrosion-resistant members 43 for shielding the excitation coils 43a from a corrosive atmosphere. The corrosion-resistant member can be formed by molding a ceramic or glass type hardenable material in a state such that the excitation coil 43a is embedded therein. The corrosion-resistant member may comprise a case 43c formed from the corrosion-resistant material. The corrosion-resistant member may comprise a sheath for covering an electrically conductive wire forming the excitation coil.

## Description

### TECHNICAL FIELD

The present invention relates to a magnetic bearing which is suitably used in a corrosive environment, especially in a highly corrosive gas environment. The present invention also relates to a magnetic floating support apparatus using such a magnetic bearing.

### TECHNICAL BACKGROUND

In a chemical vapor deposition (CVD) apparatus used for manufacture of semiconductors, a highly corrosive process gas is used. Therefore, a mount on which a substrate to be processed is mounted and magnetic bearings for effecting floating support of the mount are exposed to a highly corrosive process gas in a chamber of the apparatus. Therefore, various measures are taken so as to prevent corrosion of the mount and the magnetic bearings due to the process gas.

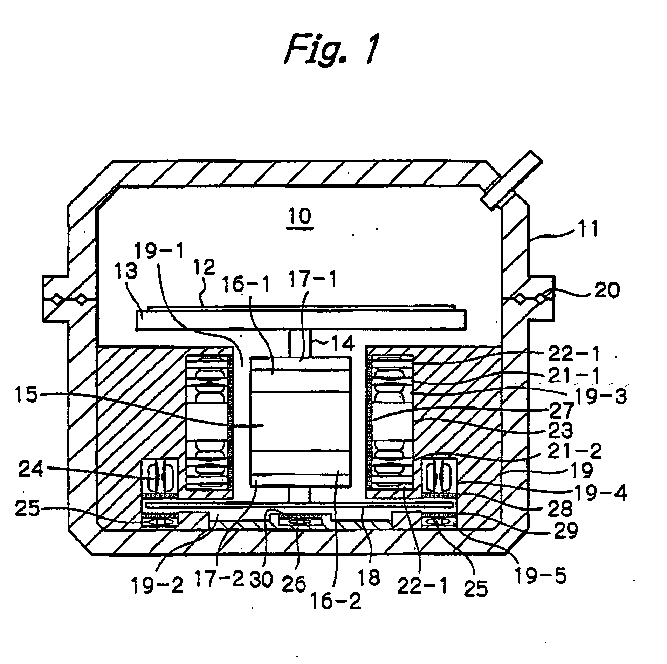

Fig. 1 shows a general arrangement of a CVD apparatus in which a conventional magnetic floating support apparatus is provided. Reference numeral 11 denotes a housing defining a CVD process chamber 10 in which a corrosive process gas is used. The housing 11 is formed by connecting a cup-shaped upper half 11-2 and a cup-shaped lower half 11-3 through a seal member 20. A turntable 13 on which a semiconductor wafer 12 is mounted is disposed in the housing 11.

The turntable 13 is supported by a rotary shaft 14. A motor rotor 15 is secured to a central portion of the rotary shaft 14. Radial magnetic bearing rotors 16-1, 16-2 are secured to the rotary shaft on an upper side and a lower side of the motor rotor 15. Radial sensor targets 17-1, 17-2 are secured to the rotary shaft on an upper side of the radial magnetic bearing rotor 16-1 and a lower side of the radial magnetic bearing rotor 16-2. Further, an axial magnetic bearing rotor 18 in the form of a circular plate is secured at a lower end of the rotary shaft 14. A motor stator (an electromagnet) 23, radial magnetic bearing stators (electromagnets) 21-1, 21-2 and radial displacement sensors 22-1, 22-2, which are associated with the motor rotor 15, the radial magnetic bearing rotors 16-1, 16-2 and the radial sensor targets 17-1, 17-2, are securely provided around the rotary shaft 14. Further, axial magnetic bearing stators (electromagnets) 24, 25 are disposed on an upper side and a lower side of a peripheral portion of the axial magnetic bearing rotor 18 in the form of a circular plate. The axial magnetic bearing stators 24, 25 are supported by a cylindrical support member 19 disposed in the lower half in the housing 10.

Illustratively stated, the cylindrical support member 19 includes a central space 19-1 for accommodating the rotary shaft 14 and the elements provided thereon such as the motor rotor 15, and a disk-shaped space 19-2 formed at a lower end of the central space 19-1 so as to accommodate the axial magnetic bearing rotor 18 in the form of a circular plate. An annular recess 19-3 is formed in an inner circumferential surface of the cylindrical support member 19 facing the central space 19-1. A separation wall 27 made of a non-magnetic material such as stainless steel is provided at an opening of the annular recess 19-3 facing the central space 19-1, so as to seal the annular recess 19-3 from the central space 19-1. The axial magnetic bearing stators 24, 25 are accommodated in annular spaces 19-4, 19-5 which are open to the disk-shaped space of the cylindrical support member 19. The axial magnetic bearing stators 24, 25 are sealed off from the disk-shaped space 19-2 by means of separation walls 28, 29, which are made of a non-magnetic material such as stainless steel and provided at the openings of the annular spaces. By means of the separation walls 27, 28, 29, 30, the magnetic bearing stators, the displacement sensors and the motor stator in the annular recesses 19-3, 19-4, 19-5 are protected from a corrosive process gas in the CVD process chamber.

The radial magnetic bearing rotors 16-1, 16-2 and radial magnetic bearing stators 21-1, 21-2 provide radial magnetic bearings, while the axial magnetic bearing rotor 18 and the axial magnetic bearing stators 24, 25 provide an axial magnetic bearing. The turntable 13 is magnetically supported in a floating condition by these magnetic bearings. The motor stator 22 and the motor rotor 15 form an electric motor which applies a torque to the turntable 13.

The radial displacement sensors 22-1, 22-2 and an axial displacement sensor 26 detect the positions of the radial sensor targets and the position of an axial sensor target, respectively, and generate position signals, which are supplied to a control circuit (not shown). Based on these signals, the control circuit controls a magnetic attractive force or a magnetic repellent force generated by the radial magnetic bearing stators 21-1, 21-2 and the axial magnetic stator 25 so that the rotary shaft 14 is floated at a predetermined position.

When the separation walls 27, 28, 29, 30 made of a non-magnetic material such as stainless steel are provided between the radial magnetic bearing stators 21-1, 21-2 and the axial magnetic bearing stators 24, 25, and the rotors 16-1, 16-2, 18 associated therewith, a magnetic gap between magnetic pole faces of the radial magnetic bearing stators 21-1, 21-2 and the radial magnetic bearing rotors 16-1, 16-2, and a magnetic gap between magnetic pole faces of the axial magnetic bearing stators 24, 25 and the axial magnetic bearing rotor 18 are increased.

When the magnetic gap is increased, a magnetic force required for controlling magnetic floating support of the rotary shaft is markedly decreased. Therefore, in order to obtain a desired magnetic force for controlling magnetic floating support of the rotary shaft, the ampere-turn of an excitation coil of the magnetic bearing stator must be increased. This is undesirable because the magnetic bearing inevitably becomes large. Especially in a CVD apparatus, a vacuum is created in the CVD process chamber 10 by means of a vacuum pump, and the magnetic bearing is used under vacuum conditions. This requires that the separation walls 27, 28, 29, 30 have relatively large wall thicknesses. The tendency of the separation wall to have a large wall thickness is further increased when the magnetic gap becomes large.

In view of the above, the present invention has been made. It is an object of the present invention to provide a magnetic bearing in which a magnetic gap between magnetic pole faces of the stator and the rotor can be reduced, and which is reduced in size and has excellent corrosion resistance. It is another object of the present invention to provide a magnetic floating support apparatus using the above-mentioned magnetic bearing.

### DISCLOSURE OF THE INVENTION

That is, the present invention provides a magnetic bearing for effecting floating support of a rotary member having a rotary shaft, comprising: a magnetic bearing rotor provided on the rotary shaft; and a magnetic bearing stator provided around the magnetic bearing rotor, wherein the magnetic bearing stator comprises: a stator core having magnetic pole faces exposed toward the magnetic bearing rotor; excitation coils attached to the stator core; and corrosion-resistant members for shielding the excitation coils from a corrosive atmosphere.

The corrosion-resistant member can be formed by molding a corrosion-resistant material in a state such that the excitation coil is embedded therein. The corrosion-resistant material may be a ceramic or glass type hardenable material. The corrosion-resistant member may comprise a case formed from the corrosion-resistant material so that the excitation coil is sealingly enclosed in the case. The corrosion-resistant member may comprise a sheath for covering an electrically conductive wire forming the excitation coil.

Further, the present invention provides a magnetic floating support apparatus comprising a plurality of magnetic bearings and adapted to effect floating support of a rotary member provided in a corrosive atmosphere, wherein each magnetic bearing comprises: a magnetic bearing rotor provided on a rotary shaft; and a magnetic bearing stator provided around the magnetic bearing rotor and the magnetic bearing stator comprises: a stator core having magnetic pole faces exposed toward the magnetic bearing rotor; excitation coils attached to the stator core; and corrosion-resistant members for shielding the excitation coils from the corrosive atmosphere.

In this case, various forms of corrosion-resistant members may be employed, as in the case of the above-mentioned magnetic bearing.

Further, the present invention provides a chemical vapor deposition apparatus comprising a turntable adapted to rotate while a semiconductor wafer is mounted thereon, the chemical vapor deposition apparatus being adapted to conduct a desired process with respect to the semiconductor wafer while the turntable is rotated, the chemical vapor deposition apparatus comprising magnetic bearings for effecting floating support of a rotary shaft of the turntable, wherein each magnetic bearing comprises: a magnetic bearing rotor provided on the rotary shaft; and a magnetic bearing stator provided around the magnetic bearing rotor, and the magnetic bearing stator comprises: a stator core having magnetic pole faces exposed toward the magnetic bearing rotor; excitation coils attached to the stator core; and corrosion-resistant members for shielding the excitation coils from a corrosive atmosphere.

In this chemical vapor deposition apparatus, various forms of corrosion-resistant members may be employed, as in the case of the above-mentioned magnetic bearing.

### BRIEF DESCRIPTION OF THE DRAWINGS

Fig. 1 shows a general arrangement of a CVD apparatus in which a conventional magnetic floating support apparatus is provided.
Fig. 2a shows a transverse section of a radial magnetic bearing according to an embodiment of the present invention.
Fig. 2b shows a vertical section of the radial magnetic bearing.
Fig. 3a shows a transverse section of a radial magnetic bearing according to another embodiment of the present invention.
Fig. 3b shows a vertical section of the radial magnetic bearing.
Fig. 4a shows a transverse section of a radial magnetic bearing according to a further embodiment of the present invention.
Fig. 4b shows a vertical section of the radial magnetic bearing.
Fig. 5 shows a general arrangement of a CVD apparatus in which a magnetic floating support apparatus according to the present invention is provided.
Fig. 6 shows arrangements of a magnetic bearing portion and a motor portion of the apparatus shown in Fig. 5.
Fig. 7 is a cross-sectional view, taken along the line A-A in Fig. 6.

### PREFERRED EMBODIMENTS OF THE INVENTION

Hereinbelow, embodiments of the present invention are described, with reference to the drawings.

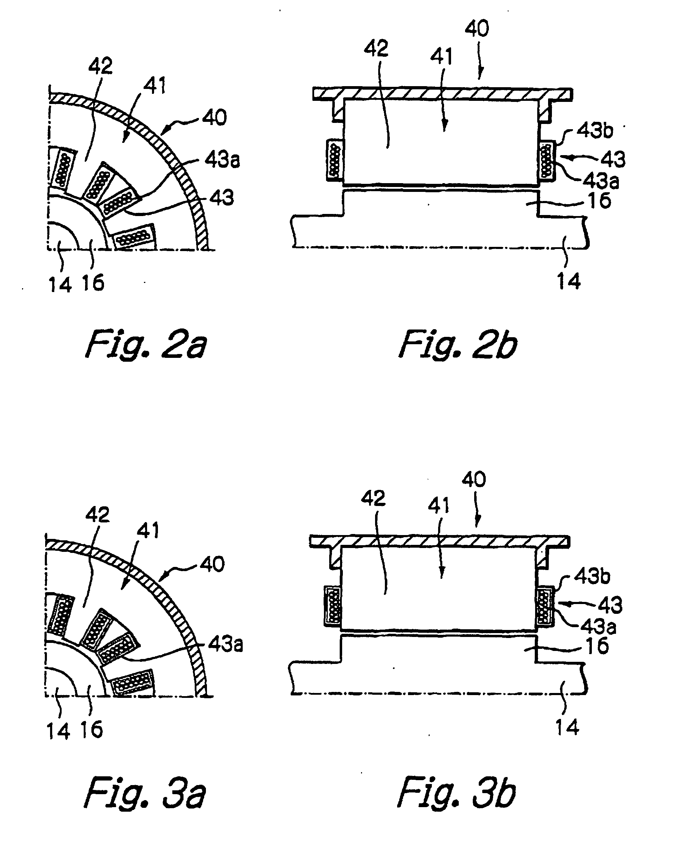

Fig. 2a and Fig. 2b show a transverse section and a vertical section of a part of a radial magnetic bearing according to the present invention. As shown in the drawings, a stator of a radial magnetic bearing 40, that is, an electromagnet 41, comprises a core (an iron core) 42 made of a magnetic body and excitation coils 43 attached to the core. The excitation coil 43 comprises a coil body 43a formed by coiling an electrically conductive wire. The coil body is embedded in a corrosion-resistant member 43b formed from a ceramic or glass type hardenable material, which is non-magnetic and has corrosion resistance against a corrosive environment, such as a process gas environment. That is, the ceramic or glass type hardenable material is molded and hardened around the coil body 43a.

Thus, the excitation coil is arranged by molding and hardening the non-magnetic, corrosion-resistant ceramic or glass type hardenable material 43b in a state such that the coil body 43a is embedded therein. Therefore, the excitation coil 43 itself has corrosion resistance. Differing from conventional techniques, it is therefore unnecessary to provide a separation wall on the magnetic pole faces of the stator core 42 facing the magnetic bearing rotor 16, so as to prevent corrosion of the excitation coils 43. That is, the magnetic bearing has a simple structure. Further, because no separation wall is provided, a magnetic gap between the stator magnetic pole 42 and the radial magnetic bearing rotor 16 can be reduced, and the radial magnetic bearing 40 can be reduced in size. Especially, a separation wall provided in a vacuum environment is required to have a large wall thickness Therefore, in a magnetic bearing used in a vacuum environment, elimination of a separation wall results in a substantial reduction in magnetic gap.

Fig. 3a and Fig. 3b show a transverse section and a vertical section of a radial magnetic bearing according to another embodiment of the present invention. As shown in the drawings, the excitation coil 43 is arranged by sealingly enclosing the coil body 43a, which is formed by coiling an electrically conductive wire, in a coil case formed from a corrosion-resistant material, that is, a corrosion-resistant member 43c. The excitation coils 43 are attached to the stator core 42, to thereby provide the electromagnet 41 of the radial magnetic bearing 40.

Thus, the excitation coil 43 is arranged by sealingly enclosing the coil body 43a in the coil case 43c having corrosion resistance. Therefore, the excitation coil 43 itself has corrosion resistance. Therefore, differing from conventional techniques, it is unnecessary to provide a separation wall on the magnetic pole faces of the stator core 42 facing the magnetic bearing rotor 16, so as to prevent corrosion of the excitation coils 43.

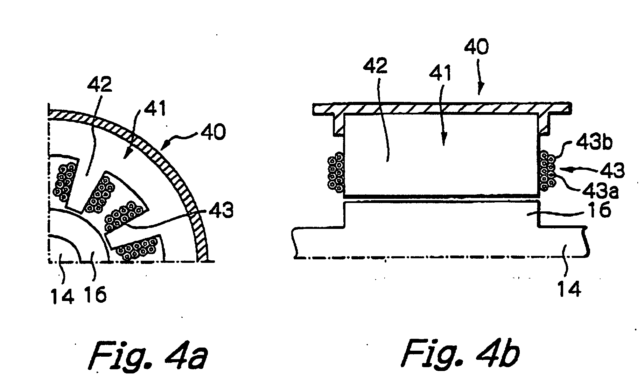

Fig. 4a and Fig. 4b show a transverse section and a vertical section of ar radial magnetic bearing according to a further embodiment of the present invention. As shown in the drawings, the excitation coil 43 is arranged by coiling a sheath wire 43d which is obtained by covering an electrically conductive wire with a sheath made of an insulating material having corrosion resistance. The excitation coils 43 are attached to the stator core 42, to thereby provide the electromagnet 41 of the radial magnetic bearing 40.

Thus, the excitation coil 43 is arranged by coiling the sheath wire 43d having a sheath made of a corrosion-resistant material. Therefore, the excitation coil 43 itself has corrosion resistance. Therefore, there is no need to provide a separation wall such as that mentioned above.

As a material for the stator core 42 of the electromagnet 41 of the radial magnetic bearing 40, use is made of a magnetic body having corrosion resistance against a corrosive environment, for example, an austenite type magnetic body or a magnetic body a surface of which has been subjected to an anticorrosion treatment, such as nickel plating.

With respect to the electromagnet of the axial magnetic bearing, the same effect as described above can be obtained by embedding a coil body in a corrosion-resistant member obtained by molding and hardening a non-magnetic, corrosion-resistant ceramic or glass type hardenable material, sealingly enclosing a coil body in a corrosion-resistant coil case or sealingly covering an electrically conductive wire with a sheath made of a corrosion-resistant material, although these arrangements are not shown with respect to the electromagnet of the axial magnetic bearing.

When an inductance type sensor is used as the radial displacement sensor, a coil having a corrosion-resistant structure such as that mentioned above is employed as the coil of the sensor, so that there is no need to provide a separation wall on the surface of the sensor magnetic pole facing the sensor target. Therefore, the magnetic gap can be reduced and a small sensor having high sensitivity can be obtained.

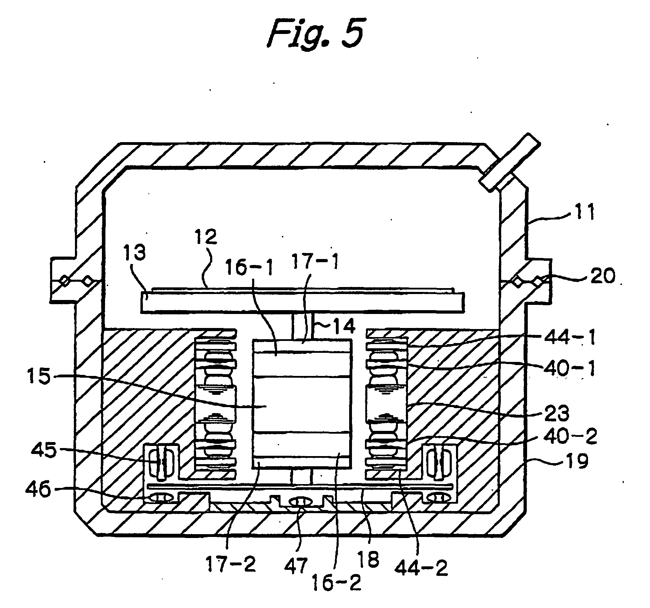

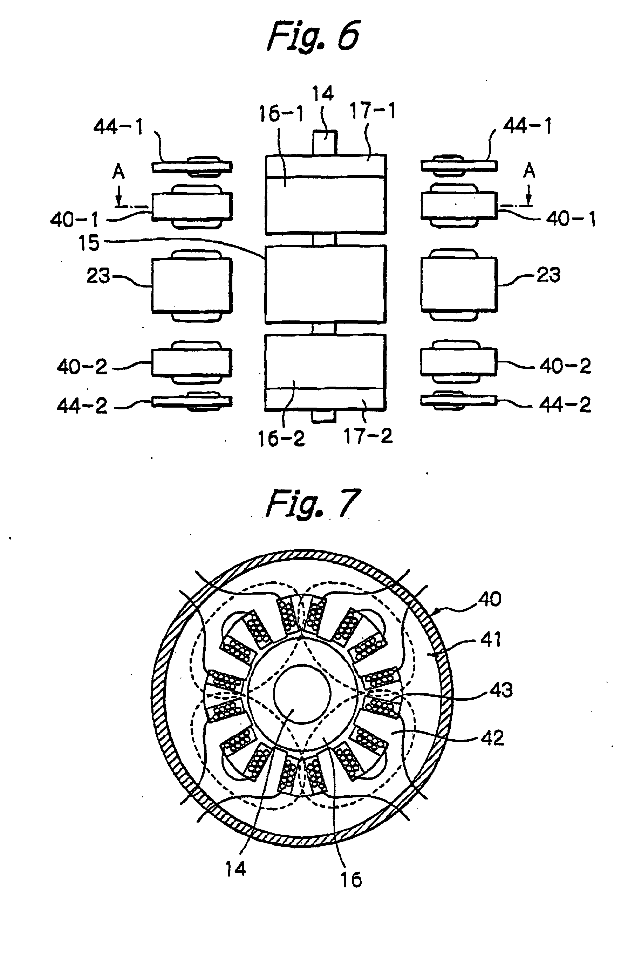

Figs. 5 to 7 show a general arrangement of a CVD apparatus in which a magnetic floating support apparatus using a magnetic bearing of the present invention is provided. Fig. 5 shows an arrangement of the entire magnetic floating support apparatus. Fig. 6 shows arrangements of a radial magnetic bearing portion and a motor portion. Fig. 7 is a cross-sectional view, taken along the line A-A in Fig. 6. In Figs. 5 to 7, the portions which are the same or correspond to those shown in Figs. 1 to 4 are designated by the same reference numerals as used in Figs. 1 to 4.

As shown in these drawings, the motor stator 23 is provided around the motor rotor 15, radial magnetic bearing stators (electromagnets) 40-1, 40-2 are provided around the radial magnetic bearing rotors 16-1, 16-2, and radial position sensors 44-1, 44-2 are provided around the radial sensor targets 17-1, 17-2. Axial magnetic bearing stators (electromagnets) 45, 46 are provided in the vicinity of an outer peripheral portion of the axial magnetic bearing rotor 18 so as to face an upper surface and a lower surface thereof. An axial displacement sensor 47 is provided so as to face a lower surface of a central portion of the axial magnetic bearing rotor 18.

In this CVD apparatus, as the radial magnetic bearing stators 40-1, 40-2, either of the radial magnetic bearings 40 having arrangements shown in Figs. 2 to 4 is used. In this embodiment, the excitation coil 43 (see Fig. 2) is obtained as one unit by embedding the coil body 43a, which is formed by coiling an electrically conductive wire, in a corrosion-resistant member formed by molding and hardening the ceramic or glass type hardenable material 43b, which is non-magnetic and has corrosion resistance against a corrosive environment such as a process gas environment.

Further, as the axial magnetic bearings 45, 46, the above-mentioned magnetic bearings of the present invention are used. That is, in the electromagnets of the axial magnetic bearings 45, 46, the coil body can be embedded in a corrosion-resistant member formed by molding a ceramic or glass type hardenable material which is non-magnetic and has corrosion resistance, can be sealingly enclosed in a coil case having corrosion resistance, or can be formed by sealingly covering an electrically conductive wire with a sheath made of a corrosion-resistant material.

Thus, according to the present invention, differing from conventional techniques, it is unnecessary to shield the rotor-facing surface of the magnetic bearing stator from a corrosive environment, by means of a non-magnetic separation wall. Therefore, the magnetic gap between the stator and the rotor can be reduced and a force required for effecting floating support can be obtained with a low power consumption. Therefore, the magnetic floating support apparatus can be reduced in size. Especially, in a conventional magnetic floating support apparatus provided in the CVD process chamber 10 in which a vacuum is normally created, it is required to provide a separation wall having a large wall thickness so as to obtain a sufficiently large strength of the wall. In the present invention, such a separation wall is not required to be used, so that the magnetic gap can be reduced by a distance corresponding to the large wall thickness of the separation wall. This markedly reduces the size of the magnetic floating support apparatus.

When an inductance type sensor is used as the radial displacement sensors 44-1, 44-2 and the axial displacement sensor 47, the coil of the sensor is protected by a corrosion-resistant member such as that mentioned above, so that it is unnecessary to provide a separation wall between the sensor and the sensor target, and therefore a displacement sensor having high sensitivity can be obtained.

Further, the motor stator 23 is also imparted with a corrosion-resistant structure. For example, it is preferred that the coil of the motor stator be imparted with a corrosion-resistant structure and the iron core of the stator be imparted with a corrosion-resistant structure or subjected to an anticorrosion treatment. Alternatively, a can structure may be formed, in which the portion of the motor stator 23 exposed to a corrosive environment is covered with a separation wall (a can).

### INDUSTRIAL APPLICABILITY

A magnetic bearing and a magnetic floating support apparatus according to the present invention can be effectively utilized especially in a corrosive gas environment, for example, in a CVD apparatus for processing of semiconductor wafers.

## Claims

1. A magnetic bearing for effecting floating support of a rotary member having a rotary shaft, comprising:
a magnetic bearing rotor provided on the rotary shaft; and
a magnetic bearing stator provided around the magnetic bearing rotor,
wherein the magnetic bearing stator comprises:
a stator core having magnetic pole faces exposed toward the magnetic bearing rotor;
excitation coils attached to the stator core; and
corrosion-resistant members for shielding the excitation coils from a corrosive atmosphere.

2. The magnetic bearing according to claim 1, wherein the corrosion-resistant member is formed by molding a corrosion-resistant material in a state such that the excitation coil is embedded therein.

3. The magnetic bearing according to claim 2, wherein the corrosion-resistant material is a ceramic or glass type hardenable material.

4. The magnetic bearing according to claim 1. wherein the corrosion-resistant member comprises a case formed from a corrosion-resistant material, the excitation coil being sealingly enclosed in the case.

5. The magnetic bearing according to claim 1, wherein the corrosion-resistant member comprises a sheath for covering an electrically conductive wire forming the excitation coil.

6. A magnetic floating support apparatus comprising a plurality of magnetic bearings and adapted to effect floating support of a rotary member provided in a corrosive atmosphere,
wherein each magnetic bearing comprises:
a magnetic bearing rotor provided on a rotary shaft; and
a magnetic bearing stator provided around the magnetic bearing rotor, and
the magnetic bearing stator comprises:
a stator core having magnetic pole faces exposed toward the magnetic bearing rotor;
excitation coils attached to the stator core; and
corrosion-resistant members for shielding the excitation coils from the corrosive atmosphere.

7. The magnetic floating support apparatus according to claim 6, wherein the corrosion-resistant member is formed by molding a corrosion-resistant material in a state such that the excitation coil is embedded therein.

8. The magnetic floating support apparatus according to claim 7, wherein the corrosion-resistant material is a ceramic or glass type hardenable material.

9. The magnetic floating support apparatus according to claim 6, wherein the corrosion-resistant member comprises a case formed from a corrosion-resistant material, the excitation coil being sealingly enclosed in the case.

10. The magnetic floating support apparatus according to claim 6, wherein the corrosion-resistant member comprises a sheath for covering an electrically conductive wire forming the excitation coil.

11. A chemical vapor deposition apparatus comprising a turntable adapted to rotate while a semiconductor wafer is mounted thereon, the chemical vapor deposition apparatus being adapted to conduct a desired process with respect to the semiconductor wafer while the turntable is rotated, the chemical vapor deposition apparatus comprising magnetic bearings for effecting floating support of a rotary shaft of the turntable,
wherein each magnetic bearing comprises:
a magnetic bearing rotor provided on the rotary shaft: and
a magnetic bearing stator provided around the magnetic bearing rotor, and
the magnetic bearing stator comprises:
a stator core having magnetic pole faces exposed toward the magnetic bearing rotor;
excitation coils attached to the stator core; and
corrosion-resistant members for shielding the excitation coils from a corrosive atmosphere.

12. The chemical vapor deposition apparatus according to claim 11, wherein the corrosion-resistant member is formed by molding a corrosion-resistant material in a state such that the excitation coil is embedded therein.

13. The chemical vapor deposition apparatus according to claim 12, wherein the corrosion-resistant material is a ceramic or glass type hardenable material.

14. The chemical vapor deposition apparatus according to claim 11, wherein the corrosion-resistant member comprises a case formed from a corrosion-resistant material, the excitation coil being sealingly enclosed in the case.

15. The chemical vapor deposition apparatus according to claim 11, wherein the corrosion-resistant member comprises a sheath for covering an electrically conductive wire forming the excitation coil.
